# EUROPEAN PATENT SPECIFICATION

(11) **EP 1 070 008 B1**
(45) Date of publication and mention of the grant of the patent: **25.08.2004**
(21) Application number: 99963661.6
(22) Date of filing: 14.12.1999
(51) Int. Cl.: B64B 1/20, B64C 39/10

(54) **AIRCRAFT EQUIPPED WITH A BULKY BODY CAUSING AN AEROSTATIC THRUST, AND CARRYING WINGS**
FLÜGELAUFWEISENDES FLUGZEUG MIT UMFANGREICHEN KÖRPER FUER AEROSTATISCHEN SCHUB
AERONEF EQUIPE D'UN CORPS VOLUMINEUX ENGENDRANT UNE POUSSEE AEROSTATIQUE ET D'AILES PORTANTES

(30) Priority: 16.02.1999 IT FI990031
(43) Date of publication of application: 24.01.2001
(73) Proprietor: Cecchi, Siro Vasco, 59100 Prato-Fraz., S. Paolo (IT)
(72) Inventor: Cecchi, Siro Vasco, 59100 Prato-Fraz., S. Paolo (IT)
(74) Representative: Turini, Laura
(86) International application number: PCT/IT1999/000409
(87) International publication number: WO 2000/048902

(56) References cited:
- EP-A- 0 583 666
- EP-A- 0 768 238
- GB-A- 2 250 007
- US-A- 3 907 218
- US-A- 4 052 025
- US-A- 5 005 783

## Description

### Technical Field

The present invention relates to the technical sector of the aeronautics and particularly of the conscruction of aircraft that move thanks to an aerostatic thrust caused by the volume of their own body.

### Background Art

At present different types of aircraft are known, practically used for transport of people and goods. Excluding rocket vehicles - mostly used for space travel - and balloons, known aircraft are essencially classified like that: proper aeroplanes, helicopters, airships. Each type of aircraft presents its known advantages and disadvantages compared with the other. Particularly, aeroplanes lead in air speed, but need very long runways; helicopters permits vertical takeoff and landing, but involve high fuel consumption and limited capacity; airships permits vertical takeoff and landing and require installed horsepower and low consumption, but are very bulky and small manoeuvrable.

This invention principally aims at realising an aircraft capable of taking off and landing in limited spaces, involving fewer fuel consumption than a normal plane or helicopter, considerable minor volume or, in case of same volume, greater load-carrying capacity and better manoeuvrability than a normal airship.

Document US 3 907 218, as well as document US 4 052 025, discloses a heaves-than-air aircraft comprising littled than-air gas lift means according to the preamble of claim 1.

### Disclosure of invention

According to the invention, the aircraft is equipped with a motorpropulsion system, and a relatively bulky body, containing lighter than-air gas and having such a volume as to cause an aerostatic thrust upwards, equal to a fraction of the total weight of the aircraft, the useful load and the stowed fuel, in order to activate the motorpropulsion system, and carrying surfaces, of any Kindon shape, set to cause, in the forward movement, the life needed to float in the air, exceeding the complementary fraction of said total weigh, characterized by the fact that it comprises:
- one or two motorpropellants, apllied to the wings at the opposite sides of said bulky body, which can be turned round a lateral axis of the aircraft in order to change the thrust direction from vertical upwards, during the lidt, that allows the aircraft to take off vertically and stop in the air, to horizontal during the flight ;
- for rotation and/on side approach manoeuvres

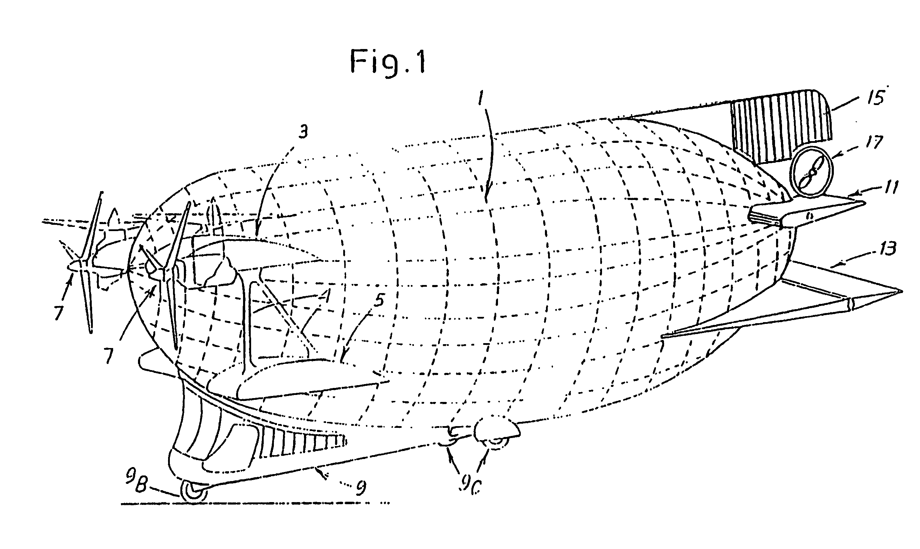

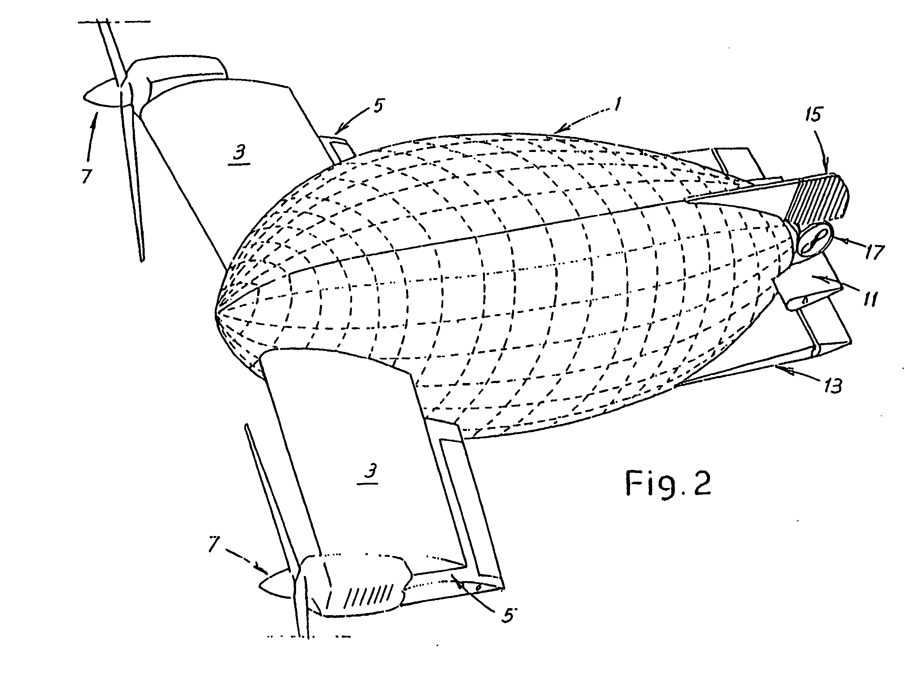

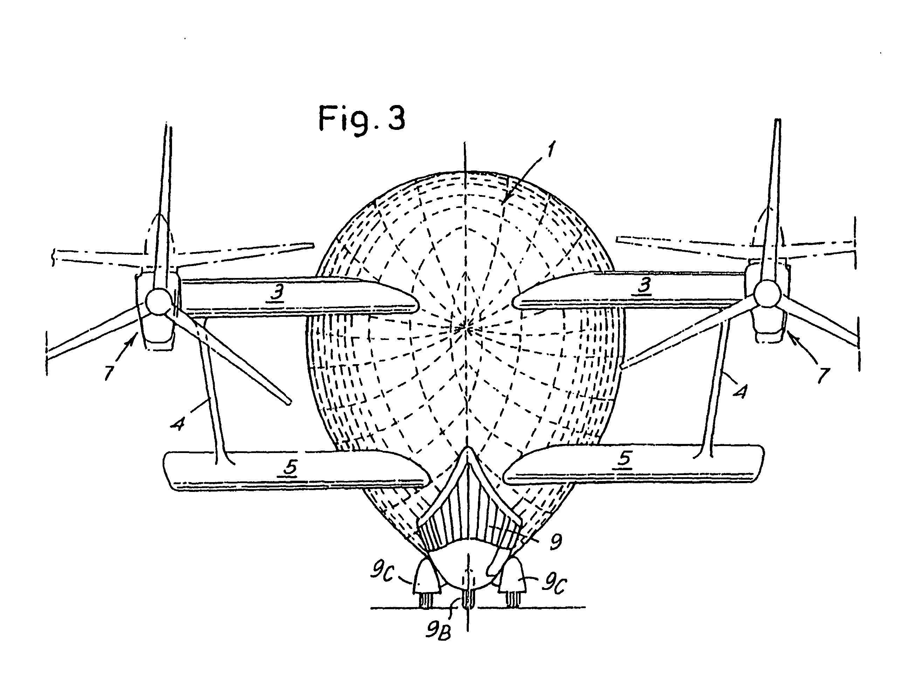

With reference to Figs. 1, 2 and 3, the aircraft comprises a relatively bulky and long-shaped body 1, containing lighter gas than the air, and a couple of overlapped wings 3, 5 extended from both sides of the body 1, attached to the front part of the same body and connected one another at their ends by means of rafters 4. Two turboprop motorpropellants 7, are attached to the upper wing 3, symmetrically at the opposite sides of the body 1. These motorpropellants may be rotated during flight, from the trim depicted with continuos mark in Fig. 1 - where their thrust is almost parallel to the longitudinal axis of the body 1 - to the trim depicted with sketched mark - where such thrust is directed mostly upwards. Below the body 1 a cabin 9 is attached, to contain the useful load and the crew, equipped with a nose-wheel undercarriage 9B and a couple of rear-wheels 9C. Finally, an elevator 13, a tailplane 11, a rudder 15 and a little mctorpropellant 17 with lateral axis propeller regarding the body 1, are attached to the back of the same body, for rotation and side approach manoeuvres.

The body 1 has such a volume as to cause an aerostatic thrust upwards, equal to a fraction, for example 50%, of the total weight of the aircraft, the useful load and the stowed fuel, in order to activate the motorpropellants 7, 17 and meet other power needs when flying. The distribution of weights and volumes is established so that the resulting aerostatic thrust is slightly backward compared with the aircraft's centre of gravity; in this way, standing on the ground, it takes a slightly tail-raised trim, as shown in Fig. 1, just with the nose-wheel 98 resting on the ground. Obviously, like in case of airships, the vehicle would be moored by its bow to the ground by means of a mooring post, in order to take a trim lined with the wind direction.

For the takeoff, motorpropellants 7 are rotated in the trim depicted with sketched mark. They are balanced so as to cause an overall thrust upwards, greater than the difference between the total weight of the aircraft and the total aerostatic thrust, in order to allow the vehicle to take off. Successively, motorpropellants are gradually rotated forwards in the trim depicted with continuous mark, in order to gradually change the vertical thrust in forward thrust; then, as the forward speed rises, the lift of the wings 3, 5 becomes sufficient to support the aircraft. In face, the tailplane 11 is a surface set to line up the longitudinal axis of the vehicle with the forward direction, lowering its back and raising its front.

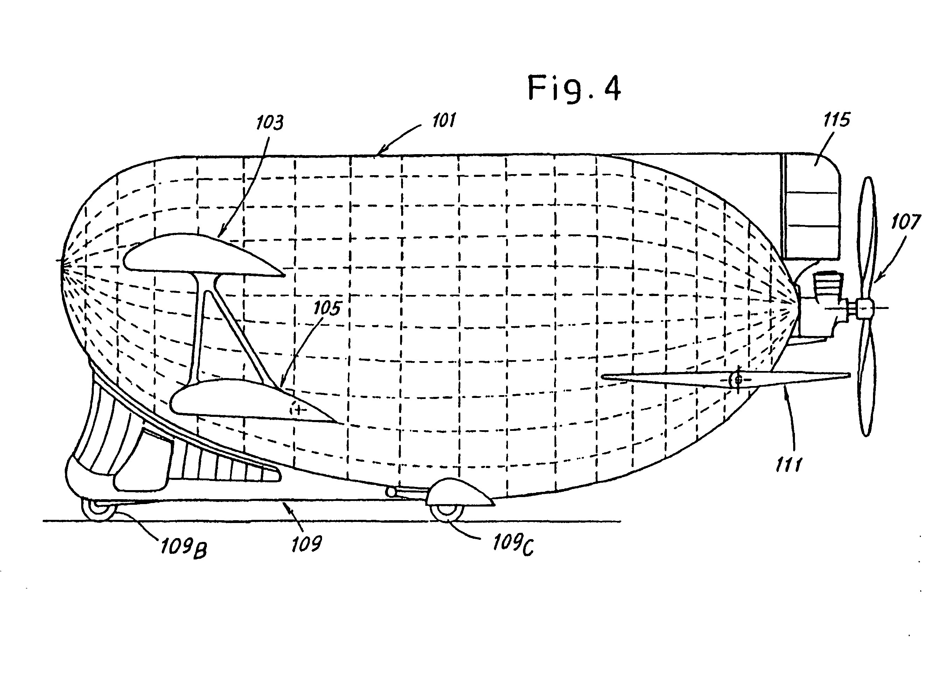

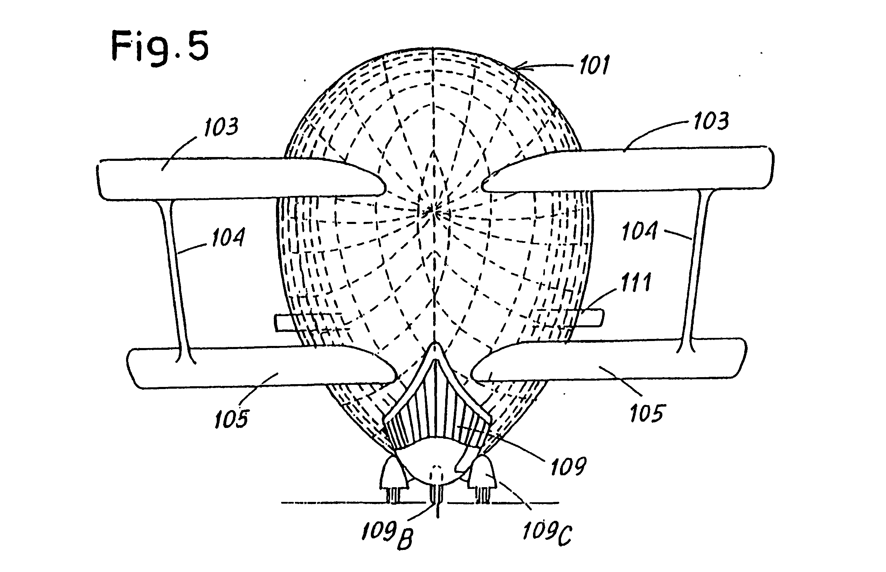

In a second practical form of the invention, with reference to Figs. 4 and 5, the vehicle seems similar to the one above described, with a bulky body 101 containing lighter gas than the air, a couple of wings 103, 105 and a cabin 109, but with a single motorpropellant 107 attached to the back of the body 101 in a fixed position. The vehicle has also a single elevator 111 and a rudder 115 placed near the motorpropellant 107. In this case, volumes and weights are distributed in such a way that the aerostatic thrust and the centre of gravity of the aircraft fall into the resting triangle of the undercarriage 109B, 109C, so that the aircraft on the ground takes a trim with the longitudinal axis almost horizontal, as shown in Fig. 4. In this practical form, the aircraft according to the invention take off and wcrk as a normal aeroplane.

As a substantial part of the aircraft weight is counterbalanced by the aerostatic thrust, in case of same useful load, the wings 3, 5; 103, 105 result much less extended compared with a normal plane, and it need a low power system of motorpropulsion, with low consumption.

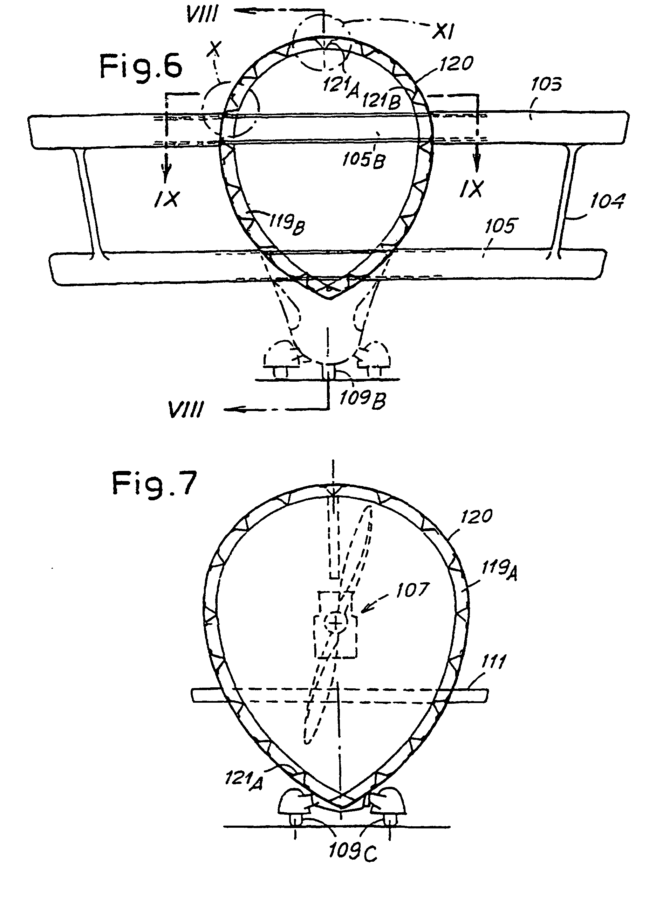

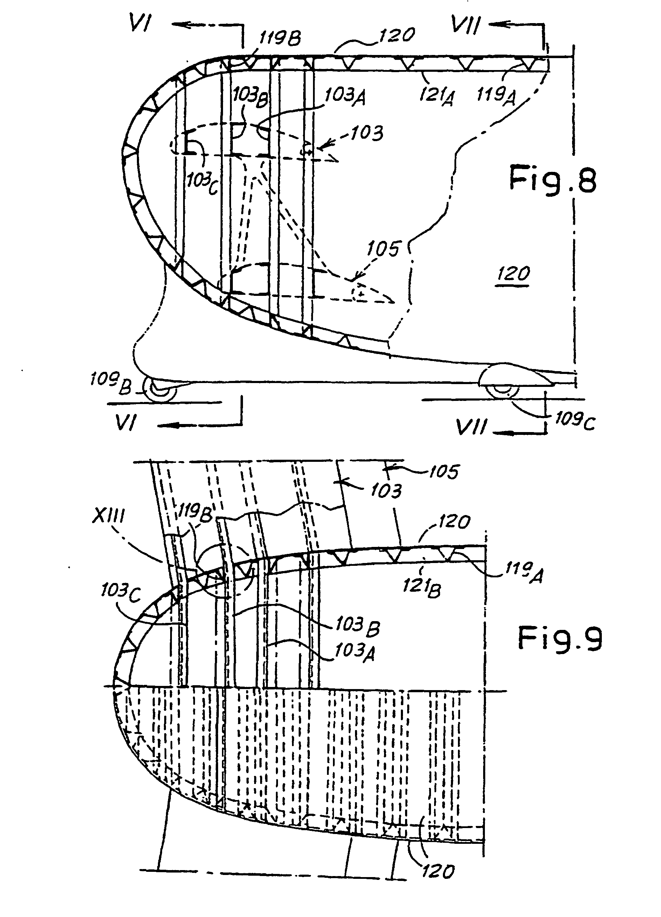

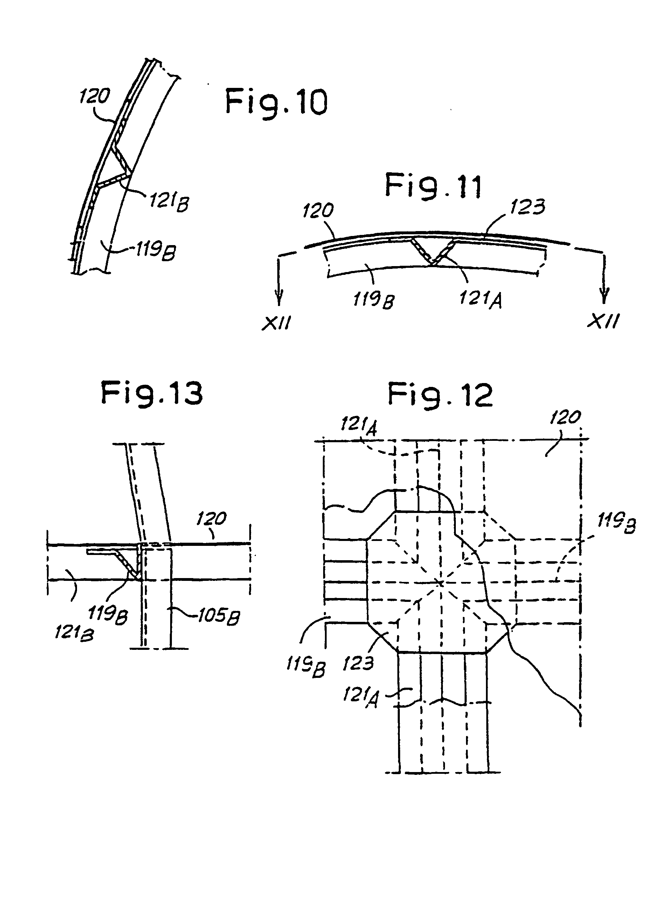

Like for some airships, said lighter gas than the air may be contained in a tight casing placed over the surface of the bulky body defined by ribs and formers as follows, i.e. in one or more balloons (not shown in the drawing) placed in the bodies 1 and 101. These bodies may be obtained covering, with a fabric or plastic laminar layer 120, a relatively rigid structure equipped with ribs such as 119A, 1193 (Figs. 6 to 13) and formers such as 121A, 121B. Ribs and formers are obtained by currents, also reticular, in light alloy plate, with v lateral section, possibly asymmetrical. In the point where they cross, they are fixed each other with gussets 123. The couple of wings 3, 5; 103, 105, connected one another by means of end rafters 4; 104, are attached to the rigid structure of the body 1; 101, by fastening their spars, such as 103A, 103B, 103C, to ribs such as 1198, by means of screws, nails, or other suitable systems (Figs. 6, 8, 9 and 13).

### Brief description of drawings.

This invention can be better understood by reading the description and looking at the enclosed drawings that are not to be considered restrictive examples of the invention.
- Figs. 1 and 2 show respectively side-front and top-side-front perspective views of a vehicle, according to a first practical form of the invention;
- Fig. 3 shows a front view of the vehicle of Figs. 1 and 2;
- Figs. 4 and 5 show respectively a side view and a front view of a second practical form of the invention;
- Figs. 6, 7, 8 and 9 show partial views of the aircraft of Fig. 4 divided into sections, respectively VI-VI, VII-VII of Fig. 8 and VIII-VIII, IX-IX of Fig. 6;
- Figs. 10 and 11 show an enlarged detail of the aircraft of Figs. 4 and 9, respectively X and XI of Fig. 6;
- Fig. 12 shows a view according to XII-XII of the detail of Fig. 11;
- Fig. 13 shows the enlarged detail XIII of Fig. 9.

Obviously, the drawings represent just practical examples of the invention, as shapes and elements may vary, but still remain within the range of the idea proposed as a solution.

Reference numbers cited in the enclosed claims aims at facilitating their reading with reference to the description, and don't limit the range of the protection represented by these claims.

## Claims

1. Heavier-than-air aircraft equipped with a motorpropulsion system, a relatively bulky body (1; 101), containing lightert-than-air gas and having such a volume as to cause an aerostatic thrust upwards, equal to a fraction of the total weight of the aircraft, the useful load and the stowed fuel, in order to activate the motorpropulsion system, and carrying surfaces, of any kind or shape (3, 5; 103, 105), set to cause, in the forward movement, the lift needed to float in the air, exceeding the complementary fraction of said total weight; **characterized by** the fact that it comprises:
- one or two motorpropellants, applied to the wings (3, 5; 103, 105) at the opposite sides of said bulky body, wich can be turned in order to change the thrust direction from vertical upwards, during the lift, that allows the aircraft to take off vertically and stop in the air, to horizontal during the flight; and
- a lateral motorpropellant (17) for rotation and/or side approach manoeuvres.

2. Aircraft according to claim 1, **characterized by** the fact that the value of the aerostatic thrust is equal to about half of the total weight.

3. Aircraft according to claims 1 **characterized by** the fact that the wings, the motorpropellants (7) and generally the centre of gravity of the aircraft are moved forwards, in flight direction, compared with the centre of the aerostatic thrust, and that in the back of said bulky body (1), planes (11) equipped with mobile surfaces, are attached, in order to give the aircraft an horizontal trim, when flying.

4. Aircraft according to claim 1 or 2, **characterized by** the fact that said carrying surfaces comprise at least a couple of wings, of any kind or shape (3, 5; 103, 105), placed at the opposite sides of said bulky body.

5. Aircraft according to anyone of the above claims, **characterized by** the fact that said motorpropulsion system comprises a single central motorpropellant with side transmission of motion to a couple of propellers, each of which is applied to a wing (3, 5; 103, 105) at the opposite sides of said bulky body.

6. Aircraft according to anyone of the above claims, **characterised by** the fact that said motorpropulsion system comprises a couple of motorpropellants (7), each of which is applied to a wing (3, 5; 103, 105) at the opposite sides of said bulky body.

7. Aircraft according to claims 1 to 3, **characterized by** the fact that the motorpropulsion system comprises a motorpropellant (107) placed behind said bulky body, regarding flight direction, and near directional surfaces (111, 115) set to vary the flight trim.

8. Aircraft according to anyone of the above claims, **characterized by** the fact that said bulky body (1; 101) has a relatively rigid structure equipped with ribs (119A, 119B, ...) and formers (121A, 121B, -) where spars (103A, 103B, 103C) of at least one couple of wings, cockpit (9; 109), undercarriage (9B, 9C; 109B, 109C) and possibly said rear motorpropellant (107), are fixed.

## Patentansprüche

1. Ein Flugzeug, das schwerer ist als Luft, ausgestattet mit einem Motorantriebssystem,dadurch charakterisiert, dass es einen relativ umfangreichen Koerper (1;101) aufweist, welcher mit einem Gas gefuellt ist, das leichter als Luft ist und der ein solches Volumen hat, dass er einen aerostatischen Schub nach oben hervorruft, gleich einem Teil des Gesamtgewichts des Flugzeugs, der Nutzlast und und des getankten Treibstoffes, um ebendieses Motorantriebssystem zu aktivieren und Tragflaechen von beliebiger Form (3,5;103,105), um den Vorwaertstrieb hervorzurufen, den der Auftrieb braucht um das Flugzeug in der Luft zu halten, wobei der komplementaere Teil des besagten Gesamtgewichts ueberschritten wird.

2. Flugzeug wie in Patentanspruch 1, dadurch charakterisiert dass der Wert des aerostatischen Schubes gleich der Haeltfte seines Gesamtgewichts ist.

3. Flugzeug, wie in Patentanspruch 1, charakterisiert durch die Tatsache dass die Fluegel, die Motorpropeller (7) und ganz allgemein die Mitte des Schwerpunktes im Vergleich mit der Mitte des aerostatischen Schubes in Flugrichtung vorwaerts getrieben werden und am Ende des besagten umfangreichen Koerpers (1) Platten mit beweglichen Oberflaechen angebracht sind, um dem Flugzeug eine horizontale Lage beim Flug zu verleihen.

4. Flugzeug, wie in Patentanspruch 1 und 2, dadurch charakterisiert, dass die Tragflaechen mindestens 2 Fluegel beliebiger Form haben (3,5;103,105) die sich hinsichtlich des besagten umfangreichen Koerpers gegenueberliegen..

5. Flugzeug wie jeder der oben genannten Patentansprueche, dadurch charakterisiert dass das besagte Propellersystem in einem einzigen zentralen Motorpropeller mit seitlicher Uebertrageung der Bewegung zu zwei Propellern besteht, von denen jeder an einem Fluegel angebracht ist (3,5;103,105) die sich hinsichtlich des besagten umfangreichen Koerpers gegenueberliegen..

6. Flugzeug wie jedes der oben genannten Patentansprueche, dadurch charakterisiert dass das besagte Motorantriebssystem zwei Motorpropeller umfasst (7), von denen ein jedes an einem Fluegel angebracht ist die sich hinsichtlich des besagten umfangreichen Koerpers gegenueberliegen..

7. Flugzeug, wie in Patentanspruch 1 und 2, dadurch charakterisiert, dass das Motorantriebssystem einen Motorpropeller besitzt, welcher im Hinblick auf die Flugrichtung hinter dem umfangreichen Koerper angebracht ist, um die Flugrichtung zu veraendern.

8. Flugzeug, wie in Patentanspruch 6, dadurch charakterisiert, dass der umfangreiche Koerper eine relativ steife Struktur aufweist und mit einem Rippengeruest (119a,103b,103c) und zumindest zwei Fluegeln, Cockpit (9,109 ) und einem Stauraum (9b,9c;109b,109c) und moeglichst mit besagtem Motorpropeller und Gangschaltung ausgeruestet ist

## Revendications

1. Aéronef ayant un poids spécifique majeur que celui de l'air et équipé d'un système de moto propulsion, doué d'un corps relativement volumineux (1 ; 101), contenant un gaz plus léger que l'air et ayant un volume suffisant à engendrer une poussée aérostatique vers le haut égale à une fraction du poids total de l'aéronef, du charge utile et du combustible contenu pour actionner le système de moto propulsion, et des surfaces portantes, de toute forme et espèce (3 ; 5 : 103 ; 105), pouvant assurer, pendant le mouvement en avant, la suspension nécessaire à flotter dans l'air, excédant la fraction complémentaire du susdit poids total, caractérisé du fait qu'il comprend:
- un ou deux moto propulseurs, appliqués aux ailes (3, 5 ; 103, 105) de deux cotés du susdit corps volumineux, qui peuvent être tournés pour changer la direction de la poussée , de la verticale pendant l'ascension, l'aéronef décollant vers l'haut et s'arrêtant dans l'air, à l'horizontale pendant le vol ; et
- un moto propulseur latérale (17) pour tourner et/ou manoeuvres d'approche latérale.

2. Aéronef dont expliqué dans la revendication 1), caractérisé du fait que la valeur de la poussée aérostatique est égale à la moitié du poids total environ.

3. Aéronef dont expliqué dans la revendication 1) caractérisé du fait que les ailes, les moto propulseurs (7) et plus en générale le centre de gravité de l'aéronef sont déplacés en avant dans la direction de vol, par apport au centre de la poussée aérostatique, et que dans l'arrière de ce corps volumineux (1), sont attachés des plans (11) équipés des surfaces mobiles, qui permettent un rangement horizontal pendant le vol.

4. Aéronef dont expliqué aux revendications 1) et 2), caractérisé du fait que les susdites surfaces portantes comprennent au moins une couple d'ailes, de toute forme et espèce (3, 5 ; 103, 105), placées de deux cotés du susdit corps volumineux.

5. Aéronef dont expliqué dans les revendications précédentes , **caractérisé** du fait que le système de moto propulsion comprend un seule moto propulseur central avec transmission latéral du mouvement vers une couple de propulseur, chacun appliqué à une aile (3, 5 ; 103, 105) des deux côtés du susdit corps volumineux.

6. Aéronef dont expliqué dans les revendications précédentes, **caractérisé** du fait que le susdit système de moto propulsion comprend une couple de moto propulseurs (7), chacun appliqué à une aile (3, 5 ; 103, 105) des deux côtés du susdit corps volumineux.

7. Aéronef dont expliqué dans les revendications 1) et 3), **caractérisé** du fait que le système de moto propulsion comprend un moto propulseur (107) placé dans l'arrière du susdit corps volumineux par apport à la direction de vol, et près des surfaces directionnelles (111, 115) permettant la variation du rangement de vol.

8. Aéronef dont expliqué dans les revendications précédentes, **caractérisé** du fait que le susdit corps volumineux (1 ; 101) présente une structure relativement rigide équipée de cotes (119A, 119B, ...) parallèles et de modules (121A, 121 B, ...) croisés, auxquels se fixent les parties allongées des ailes, la cabine (9 ; 109), le chariot d'atterrissage (9B, 9C ; 109B, 109C), et éventuellement le moto propulseur arrière (107).
